# EUROPEAN PATENT APPLICATION

(11) **EP 2 104 380 A2**
(43) Date of publication of application: **23.09.2009**
(21) Application number: 09155054.1
(22) Date of filing: 12.03.2009
(51) Int. Cl.: H04W 4/04, H04W 84/00, H04B 1/38, H04M 1/60

(54) **A location based audio reception zone system for use with vehicular entertainment systems**

(30) Priority: 19.03.2008 US 77499
(71) Applicant: Delphi Technologies, Inc., Troy, Michigan 48007 (US)
(72) Inventor: Boyer, Bradley E., Greentown, IN 46936 (US); Zackschewski, Shawn R., Kokomo, IN 46902 (US); Wittenbach, David E., Kokomo, IN 46902 (US); Bishop, David L., Kokomo, IN 46902 (US)
(74) Representative: Denton, Michael John

(57) **Abstract**

A location based audio reception zone system (100) for use in vehicle includes a driver's seat (107) and one or more passenger seats (101). A radio frequency (RF) transmitter (111) is used for transmitting entertainment content to one or more headsets (103) located in a passenger seat (101). The RF transmitter (111) transmits in a predefined reception zone for disabling audio in a headset (113) located within the zone for preventing a driver from using the headset (113) when in the driver's seat (107). The invention enhances safe driving practices for preventing entertainment audio from being received by the headsets located in proximity to the driver's seat.

## Description

### Technical Field

The present invention relates to a location based audio reception system which has particular use as an automotive and/or public transportation vehicle accessory, and more particularly to wireless headphones used in automotive and public transportation applications.

### Background of the Invention

Currently, vehicles with rear seat entertainment (RSE) units use infrared (IR) transmission for most headphone applications. Headphones are used to receive audio programming without interrupting or disturbing the driver or other passengers. Due to the directional nature of the IR transmission to the headset, the driver of a vehicle is not able to receive the audio transmission while seated in the driver's seat.

In order to provide improved performance, many new headphone technologies require the use of a radio frequency (RF) link between the RSE unit and the headphone using BLUETOOTH, WiFi technologies, or the like. However, automotive design specifications, as well as some local laws, require that the vehicle's driver not be able to receive audio directed to driver-worn headsets. Presumably, this is in order to maintain safe driving conditions so as to prevent driver distraction while the vehicle is in operation. As the next generation of RF-type headphones come into use with RSE units, a means to "silent" or mute a driver's headset that will act to prevent reception of programming by a vehicle's driver will be required. Currently, automotive manufacturers have no solution for this type of problem.

### Summary of the Invention

A location based audio reception zone system in accordance with the present invention comprises a first zone; a second zone; a first transmitter for broadcasting entertainment content to the first and second zones; and a second transmitter for disabling at least one headset when located in the first zone.

Additionally, a location based audio reception zone system in accordance with the present invention comprises a first zone; a second zone; a radio frequency (RF) transmitter for transmitting entertainment content to at least one headset located in proximity to the second zone; and wherein the RF transmitter transmits to a predefined reception zone which excludes the first zone.

Although primarily intended for use in a motor vehicle, the present invention may also be adapted for use in non-automotive applications.

When used in a motor vehicle, an embodiment of the present invention is directed to a location based audio reception zone system that includes a driver's seat and at least one passenger seat. A first transmitter located within the vehicle is used for broadcasting entertainment content to headsets worn by the passengers. A second transmitter also located in the vehicle is used for disabling at least one headset when the headset is located in proximity to the driver's seat. Although the first transmitter is primarily used for transmitting a radio frequency (RF) signal, the second transmitter may use an RF signal, an infrared (IR) signal, or combinations thereof. Various other techniques may be used, such as using directional antennas or locating a wire loop antenna above the driver's seat for use in disabling a headset worn by the vehicle's driver. The invention promotes safe driving conditions for preventing a driver from being distracted if wearing headsets used in connection with an onboard vehicle entertainment system.

These and other features, advantages, and objects of the present invention will be further understood and appreciated by those skilled in the art by reference to the following specifications, claims, and appended drawings.

### Brief Description of the Drawings

The present invention will now be described, by way of example, with reference to the accompanying drawings, in which:
FIG. 1 is a top view of a vehicle using a proximity transmitter in a location based reception zone in accordance with an embodiment of the invention.
FIG. 2 is a top view of a vehicle using a focused or directional transmission antenna transmitting toward a primary reception area in a location based reception zone in accordance with an alternative embodiment of the invention.
FIG. 3 is a top view of a vehicle using a directional signal aimed at a driver's seat in a location based reception zone in accordance with an alternative embodiment of the invention.
FIG. 4 is a top view of a vehicle using a wire loop antenna located in a vehicle headliner for defining a location based reception zone in accordance with an alternative embodiment of the invention.
FIG. 5 is a flowchart diagram illustrating the operation of the method as used in FIG. 3.

### Description of the Preferred Embodiment

Before describing in detail embodiments that are in accordance with the present invention, it should be observed that the embodiments reside primarily in combinations of method steps and apparatus components related to a Faraday cage electronic enclosure. Accordingly, the apparatus components and method steps have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

In this document, relational terms such as first and second, top and bottom, and the like may be used solely to distinguish one entity or action from another entity or action without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises ... a" does not, without more constraints, preclude the existence of additional identical elements in the process, method, article, or apparatus that comprises the element.

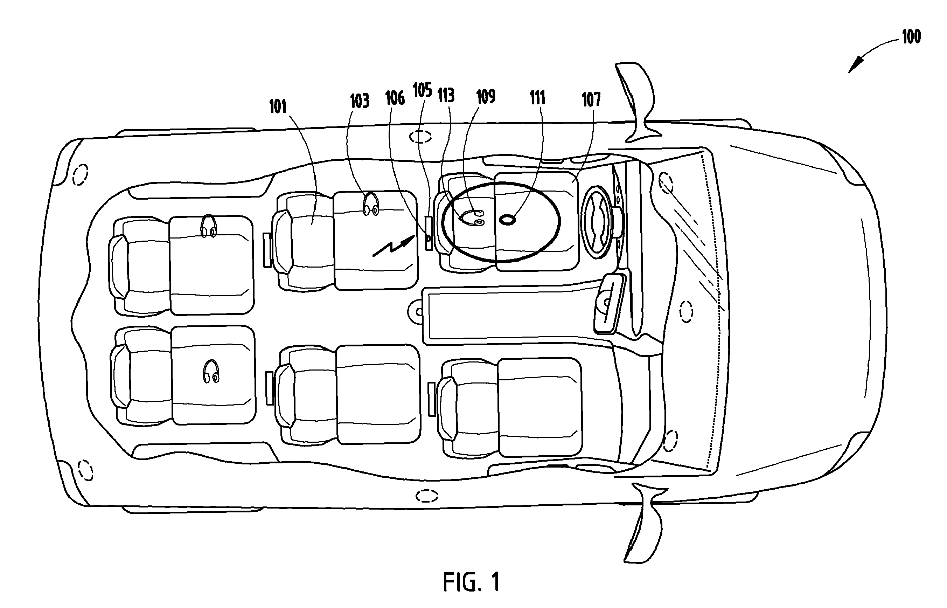

FIG. 1 is a top view of a location based audio reception zone system 100 using a proximity transmitter, of capacitive, inductive, or the like, for use in a location based reception zone in accordance with an embodiment of the invention. The vehicle includes one or more seats 101 each using a headphone 103 and a monitor 105. The monitor 105 may include a first transmitter 106 for broadcasting wireless audio to the passenger, utilizing analog RF, BLUETOOTH, WiFi, IR wireless technologies, or the like. As will be evident to those skilled in the art, this type of rear seat entertainment system operates by utilizing analog and/or digital audio which is supplied in a wireless manner to the headset 103 using the first transmitter 106 such that each passenger may utilize his own wireless transmitter operating at some predetermined frequency and/or channel. A passenger sitting in a seat 101 generally views video from the monitor 105 located in his viewing vicinity while listening to associated audio through the headset 103.

In order to prevent the driver sitting in seat 107 from utilizing wireless headsets 109, a second transmitter such as proximity transmitter 111 is mounted in substantially close proximity to the seat 107. The range of the proximity sensor transmitter 111 to the seat 107 may be within one to several meters in spatial distance. In one embodiment, that proximity transmitter 111 can be mounted discretely in the headliner or roof area above the driver's head. In operation, a corresponding receiver sensor 113 is then molded into the top of the headphones 109. If the headphones 109 are worn by a user sitting in the driver seat 107, the proximity transmitter 111 is detected by the receiver sensor 113, which enables an RF or IR disabling signal to be sent toward or in the direction of the driver's head location. In turn, audio circuitry (not shown) within the headphone 109 detects the disabling signal in view of its substantially close proximity. This operates to disable the audio output from the headphone 109 to an "off" or muted state for preventing audio from being played to the user in the driver's seat 107.

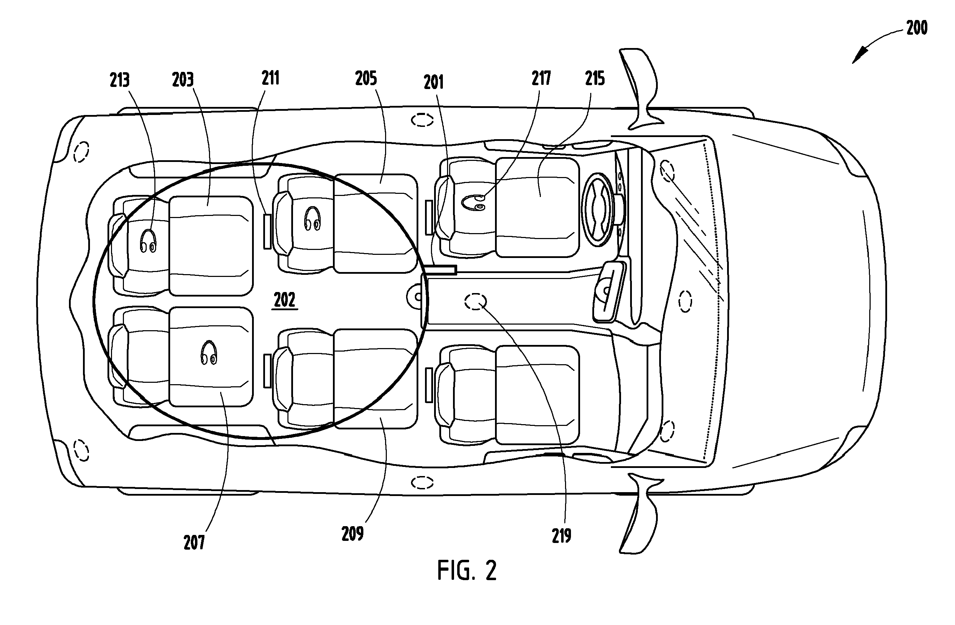

FIG. 2 is a top view of a vehicle using a location based audio reception zone system 200 which uses a focused or directional transmission antenna targeting a primary reception area. In this alternative embodiment, a transmission device 201 operates by directing an RF transmission signal using a second transmitter toward a primary reception zone or area 202. The second transmitter may be located in the vehicle's center console 219 or the like.

Like that shown in FIG. 1, the primary reception area 202 may encompass one or more seats 203, 205, 207, and 209. For example, seat 203 may include a video monitor device 211 using a first transmitter and a wireless headset 213. The video monitor 211 is used for viewing video programming within the rear seat entertainment area, while the wireless headset 213 is used for listening to the corresponding audio signal wirelessly broadcast from the video monitor device 211 and first transmitter. The transmission device 201 uses a directional transmission antenna (not shown) for directing the RF signal in a rearward manner to encompass only those seats within the primary reception area 202. The antenna's transmission pattern can be "notched" such that the RF signal is attenuated which would prevent reception and/or transmission toward a driver's seat 215 using a wireless headset 217. In yet another embodiment, each of the wireless headphones may include a signal strength algorithm that is characterized to react to low-level signal reflections of RF in the vehicle. If an RF signal were below some radio signal strength indication (RSSI) predetermined threshold, a microprocessor (not shown) using the algorithm would determine that the wireless headset 215 were outside of the primary reception area 202 which would prevent it from receiving these audio transmissions.

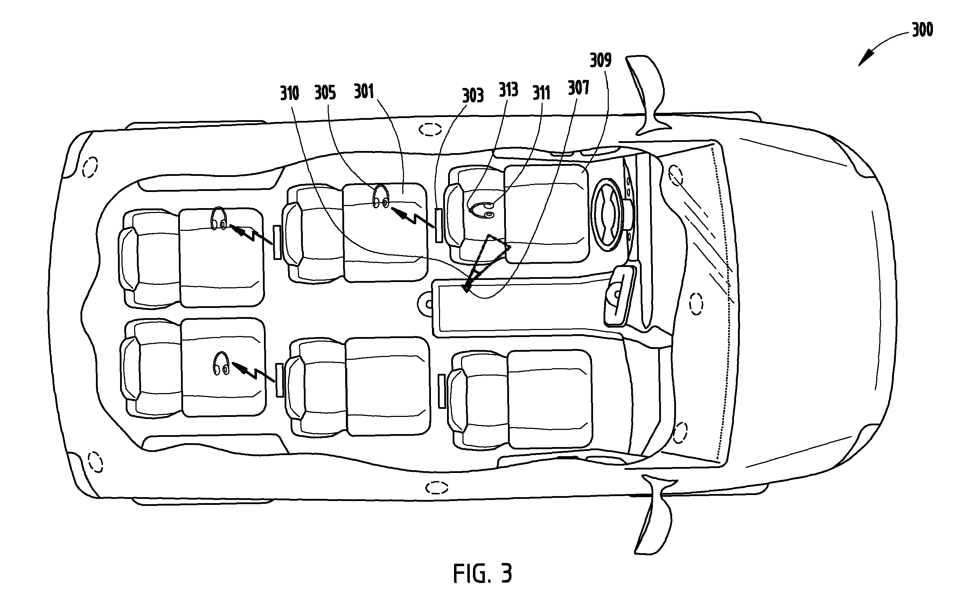

FIG. 3 is a top view of a vehicle using a location based audio reception zone system 300 using a directional signal aimed at the driver's seat in accordance with another alternative embodiment of the invention. The reception zone system 300 includes one or more passenger seats 301 used in connection with a rear seat entertainment system. The rear seat entertainment system includes one or more video monitors 303 having a first IR or RF transmitter for viewing video entertainment programming. One or more wireless headsets 305 are used by the passengers for listening to the audio programming from the first transmitter. A second transmitter 307 is located in a center console or other convenient location and may use analog signaling, BLUETOOTH, WiFi, IR, or combinations thereof in connection with a directional antenna 310. The second transmitter 307 is used for directing or beaming a signal aimed at a specific reception location, such as the driver's seat 309.

If a user in the driver's seat 309 were wearing a wireless headset 311, the signal projected toward the headset will be detected by a reception device 313. The reception device 313 is typically located on the headset 311 and works in connection therewith. When the reception device 313 detects the signal, the normal operation and/or desired output of the device may be either enabled or disabled depending on design criteria. An example of disabling the signal might be to transmit an IR or RF signal toward the driver's head which presumably will be where the headset would be worn. This signal will direct the headset 311 to either disable a warning-type message or disable an audio-blocking/jamming type signal. In both instances, the warning or audio disabling message may be transmitted from a remote location. When headphones are worn while in the driver's seat, the reception device 313 detects the signal and the audio circuitry in the headphone is muted or turned "off," disabling its audio output. An example of enabling the signal might be to transmit an IR or RF signal toward the driver's head location. When headphones are worn while in the driver's seat, the reception device 313 detects the signal and the audio circuitry in the headphone is turned to an "on" state, enabling the audio output.

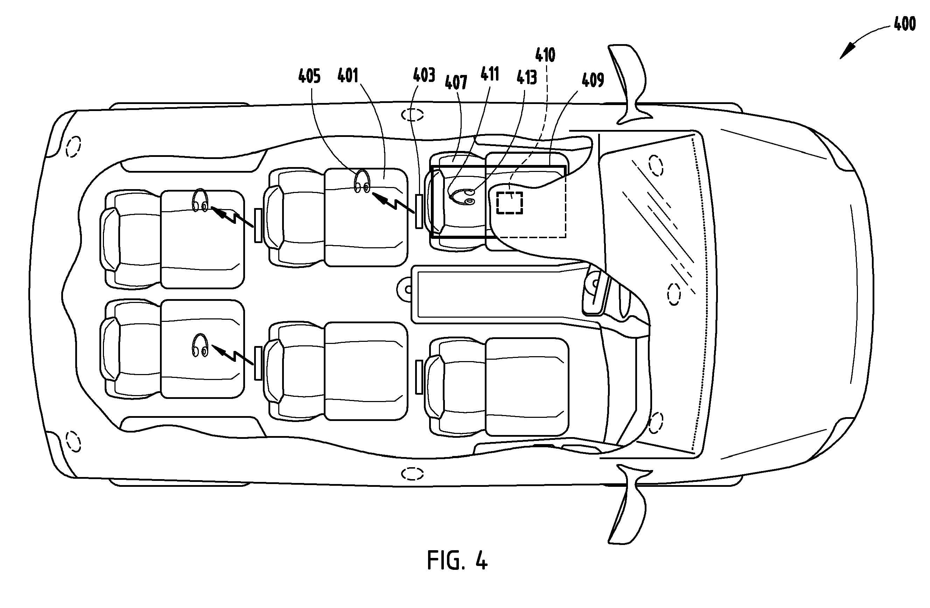

FIG. 4 is a top view of a vehicle using a location based audio reception zone system 400 having a loop-type antenna located in the vehicle headliner in accordance with an alternative embodiment of the invention. The reception zone system 400 includes one or more passenger seats 401 which use a rear seat vehicle entertainment system comprised of a video screen 403 using an RF or IR first transmitter along with one or more pairs of wireless headsets 405. Above the driver's seat 407 a wire is embedded in the headliner of the vehicle to form a loop antenna 409. If a driver were wearing headset 413 located beneath the wire antenna 409, a receiver 411 located with the headset 413 operates to detect an RF signal broadcast using the loop antenna 409 from a second transmitter 410. If such an RF signal is detected by the receiver 411, audio circuitry in the headset is turned "off," muted, and/or disabled. Directional methods of transmission and wire antennas integrated into the vehicle each operate to disable audio transmissions thereby preventing headsets worn by a driver for being used to receive RF signal transmissions from the on-board entertainment system.

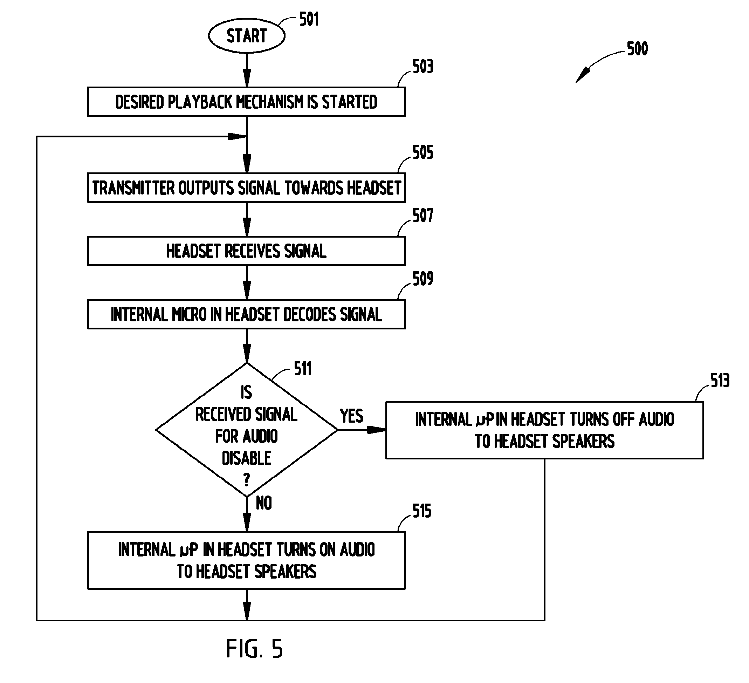

FIG. 5 is a flowchart diagram illustrating the logical process 300 used by a system shown in FIG. 3. The process starts 501 where the user initiates 503 a playback device. The transmitter outputs an IR or RF signal 505 aimed at the desired reception area. A headset, located in the desired area, receives the IR or RF signal 507. The microprocessor internal the headset then decodes 509 the signal and determines 511 whether the headset should control the audio to a disabled or "off" state 513 or an enabled or "on" state 515. Thereafter, the process continues when one or more headsets move into the reception area or the headset is removed from the reception area and reenters that same area.

It will be understood by those who practice the invention and those skilled in the art, that various modifications and improvements may be made to the invention without departing from the spirit of the disclosed concept. The scope of protection afforded is to be determined by the claims and by the breadth of interpretation allowed by law.

## Claims

1. A location based audio reception zone system comprising:
a first zone (107);
a second zone (101);
a first transmitter (106) for broadcasting entertainment content to the first and second zones; and
a second transmitter (111) for disabling at least one headset (109) when located in the first zone (107).

2. A location based audio reception zone system as in claim 1, wherein the first transmitter (106) transmits radio frequency (RF) signals.

3. A location based audio reception zone system as in claim 1, wherein the second transmitter (111) transmits a radio frequency (RF) signal or an infrared (IR) signal.

4. A location based audio reception zone system as in claim 1, wherein the second transmitter (111) broadcasts in a predetermined perimeter around the first zone (107).

5. A location based audio reception zone system (300) as claimed in any one of claims 1 to 4, further comprising:
a directional antenna (310) connected to the second transmitter (307) for directing a second transmitted signal toward the first zone (309) for disabling the at least one headset (311) when located in the first zone.

6. A location based audio reception zone system (400) as claimed in any one of claims 1 to 4, further comprising:
a loop antenna (409) connected to the second transmitter (410) for transmitting a second signal toward the first zone (407) for disabling the at least one headset (413) when located in the first zone.

7. A location based audio reception zone system as in claim 6, wherein the loop antenna (409) is located above the first zone (407).

8. A location based audio reception zone system as in claim 6 or claim 7, wherein the loop antenna (409) is substantially rectangular in shape.

9. A location based audio reception zone system as claimed in any one of claims 1 to 8, when used in a motor vehicle, wherein the first zone includes the driver's seat, and the second zone includes one or more passenger seats.

10. A location based audio reception zone system (200) comprising:
a first zone (215);
a second zone (203);
a radio frequency (RF) transmitter (211) for transmitting entertainment content to at least one headset (213) located in proximity to the second zone (203); and
wherein the RF transmitter (211) transmits to a predefined reception zone (202) which excludes the first zone (215).

11. A location based audio reception zone system as claimed in claim 10, when used in a motor vehicle, wherein the first zone includes the driver's seat (215), and the second zone includes one or more passenger seats (203).

12. A location based audio reception zone system as in claim 11, wherein that at least one passenger seat (203) is located behind the driver's seat (215).

13. A location based audio reception zone system as in claim 11, wherein that at least one passenger seat (203) includes a group of at least four seats.

14. A location based audio reception zone system as in claim 11, wherein the RF transmitter (211) may be co-located within a vehicle center console (219).
